# EUROPÄISCHE PATENTSCHRIFT

(11) **EP 3 515 640 B1**
(45) Veröffentlichungstag und Bekanntmachung des Hinweises auf die Patenterteilung: **20.07.2022**
(21) Anmeldenummer: 17764611.4
(22) Anmeldetag: 12.09.2017
(51) Int. Cl.: B23B 51/02

(54) **BOHRER**
DRILL BIT
FORET

(30) Priorität: 19.09.2016 EP 16189452
(43) Veröffentlichungstag der Anmeldung: 31.07.2019
(73) Patentinhaber: Hilti Aktiengesellschaft, 9494 Schaan (LI)
(72) Erfinder: SCHROEDER, Florian, 7304 Maienfeld (CH); DOMANI, Guenter, 88138 Weissensberg (DE); PETERS, Carsten, 9468 Sax (CH)
(74) Vertreter: Hilti Aktiengesellschaft Corporate Intellectual Property
(86) Internationale Anmeldenummer: PCT/EP2017/072864
(87) Internationale Veröffentlichungsnummer: WO 2018/050625

(56) Entgegenhaltungen:
- EP-A1- 1 475 510
- DE-A1- 3 730 378
- US-A1- 2004 067 115

## Beschreibung

### GEBIET DER ERFINDUNG

Die vorliegende Erfindung betrifft einen Bohrer, insbesondere einen Bohrer zum Bearbeiten von mineralischen Materialien, gemäß dem Oberbegriff von Anspruch 1 und wie aus EP 1475510 A1, US 2004067115 A1 und DE 3730378 A1 bekannt.

### OFFENBARUNG DER ERFINDUNG

Der im Anspruch 1 beanspruchte, erfindungsgemäße Bohrer hat ein Einsteckende, eine Wendel und einen Bohrkopf. Eine Bohrerachse verläuft durch das Einsteckende, die Wendel und den Bohrkopf. Die Wendel weist eine Förderflanke auf, welche gegenüber der Bohrerachse geneigt, welche dem Bohrkopf zugewandt ist und welche helixförmig um die Bohrerachse verläuft. Die Förderflanke hat eine helixförmig um die Bohrerachse verlaufende Vertiefung. Das Bohrgut wird auf der Vertiefung transportiert. Eine Rauheit der Oberfläche in der Vertiefung ist geringer als eine Rauheit der Oberfläche der Förderflanke außerhalb der Vertiefung.

Die Wendel weist vorzugsweise eine Freiflanke auf, welche gegenüber der Bohrerachse geneigt ist, welche von dem Bohrkopf abgewandt ist und welche helixförmig um die Bohrerachse verläuft. Die Freiflanke ist in radialer Richtung durchgehend konkav ausgebildet, im Gegensatz zu der Förderflanke mit der Vertiefung.

Eine Rauheit der Oberfläche der Freiflanke kann größer als eine Rauheit der Oberfläche in der Vertiefung sein.

Die Vertiefung kann wenigstens ein Viertel der Fläche der Förderflanke ausbilden. Die Fläche der Vertiefung trägt zu einem erheblichen Anteil an der Förderleistung der Wendel bei.

Die Vertiefung ist von einer inneren Kante und einer äußeren Kante gesäumt. Die innere Kante kann in einem Radius um die die Bohrerachse verlaufen. Der innere Radius ist größer als 60 % eines Kerndurchmessers der Wendel. Die Vertiefung beginnt nicht an dem Nutgrund sondern dazu in radialer Richtung versetzt.

Eine Ausgestaltung sieht eine Freiflanke 24bz vor, welche gegenüber der Bohrerachse 6bz geneigt und von dem Bohrkopf 2bz abgewandt ist, wobei die Freiflanke 24bz keine der Förderflanke 25bz entsprechende Vertiefung aufweist. Die Freiflanke 24bz und die Förderflanke 25bz sind nicht spiegel-symmetrisch zueinander ausgebildet.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrer
- Fig. 2: einen Bohrkopf in einer Draufsicht,
- Fig. 3: den Bohrkopf in einer Seitenansicht,
- Fig. 4: einen Längsschnitt durch die Wendel des Bohrers,

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

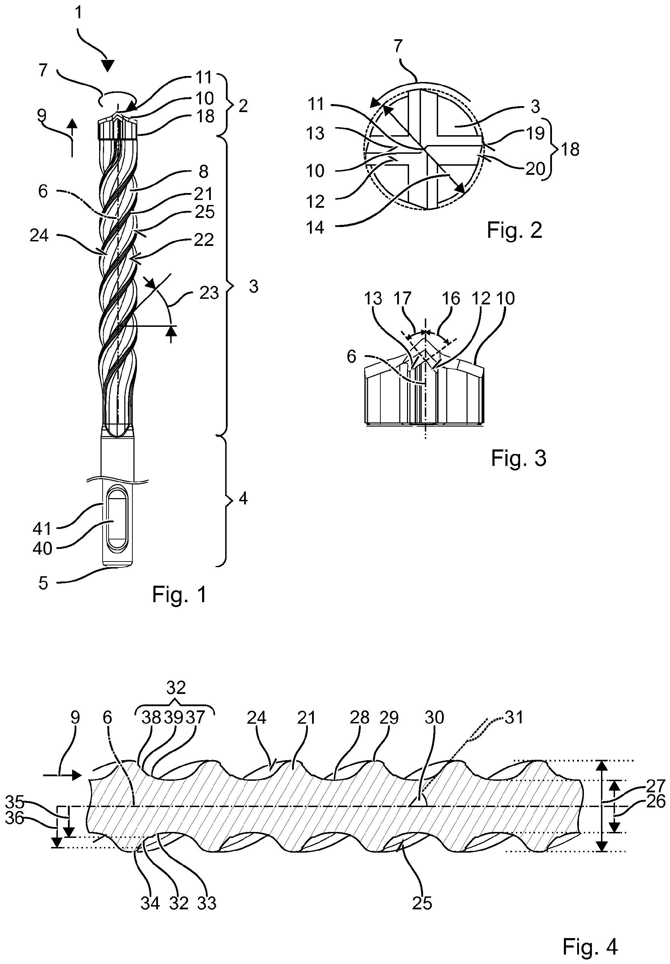

Fig. 1 zeigt einen beispielhaften Bohrer **1.** Der Bohrer **1** hat einen Bohrkopf **2,** einen Förderabschnitt **3** ein Einsteckende **4** und eine Schlagfläche **5.** Eine Bohrerachse **6** des Bohrers **1** verläuft durch den Bohrkopf **2** und die Schlagfläche **5.** Der Bohrer **1** ist beispielsweise für den Abbau von mineralischen Werkstoffen, z.B. armiertem Beton, ausgelegt. Ein Schlagwerk einer Handwerkzeugmaschine schlägt periodisch auf die Schlagfläche **5** an dem Einsteckende **4.** Die Stoßwelle der Schläge läuft durch die Wendel **8** in Schlagrichtung **9** zu dem Bohrkopf **2.** Der Bohrkopf **2** zertrümmert den Werkstoff. Der Bohrer **1** wird während den Schlägen in einem Drehsinn **7** um seine Bohrerachse 6 gedreht. Die Handwerkzeugmaschine weist einen entsprechenden Drehantrieb auf. Die Drehbewegung stellt sicher, dass der Bohrkopf **2** unter verschiedenen Orientierungen auf den Untergrund aufschlägt und das Bohrloch gleichmäßig ausgeschlagen wird.

Der beispielhafte Bohrkopf **2** hat vier Meißelkanten **10.** Die Meißelkanten **10** laufen an einer Spitze **11** auf der Bohrerachse **6** zusammen. Die Spitze **11** ist vorzugsweise der in Schlagrichtung **9** höchste Punkt, welche somit beim Bohren zuerst den Werkstoff kontaktiert. Die Meißelkanten **10** können in radialer Richtung von außen zur Bohrerachse **6** hin längs der Schlagrichtung **9** ansteigen. Die Meißelkanten **10** weisen alle in die Schlagrichtung **9.** Die Meißelkanten **10** können alle gleich ausgestaltet sein, oder paarweise verschieden sein. Die Meißelkante **10** wird durch jeweils eine im Drehsinn **7** vorauslaufende Spanfläche **12** und im Drehsinn **7** nachlaufende Freifläche **13** gebildet. Die Meißelkanten **10** geben den Durchmesser **14** des Bohrers **1** und damit den Durchmesser eine mit dem Bohrer **1** gebohrten Bohrlochs vor.

Der Drehsinn **7** verläuft entgegen der Schlagrichtung **9** auf den Bohrkopf **2** blickend im Gegenuhrzeigersinn, wie dies typisch für die gattungsgemäßen Bohrer **1** ist (Fig. 2). Die Spanfläche **12** und die Freifläche **13** sind zueinander geneigt, der Dachwinkel an der Meißelkante **10** ist größer als 45 Grad, vorzugsweise größer 60 Grad und geringer als 120 Grad. Die Spanfläche **12** ist vorzugsweise weniger gegenüber der Bohrerachse **6** geneigt, wie die Freifläche **13.** Ein Neigungswinkel **16** der Spanfläche **12** gegenüber der Bohrerachse **6** ist geringer als ein Neigungswinkel **17** der Freifläche **13** gegenüber der Bohrerachse **6.** Der Flächeninhalt der Spanfläche **12** ist geringer als der Flächeninhalt der Freifläche **13.** Hierdurch wird eine höhere Abbauleistung erreicht für den vorgegebenen Drehsinn **7** im Gegenuhrzeigersinn erreicht.

Der Bohrkopf **2** hat vier Abbruchkanten **18,** die parallel zu der Bohrerachse **6** verlaufen. Die Abbruchkanten **18** gehen in die Meißelkanten **10** über. Die Abbruchkanten **18** definieren den Durchmesser des Bohrkopfs **2.** Die Anzahl der Meißelkanten **10** und der Abbruchkanten **18** kann in Abhängigkeit des Durchmessers des Bohrers **1** gewählt sein. Beispielsweise kann bei einem Bohrer **1** geringen Durchmessers der Bohrkopf **2** zwei Meißelkanten **10,** ein Bohrkopf **2** großen Durchmessers mehr als vier Meißelkanten **10** und entsprechende Zahl von Abbruchkanten **18** aufweisen. Die Abbruchkanten **18** haben eine im Drehsinn **7** vorauslaufende Flanke **19** und eine im Drehsinn **7** nachfolgende Flanke **20.** Die Flanken **19, 20** sind beide im Wesentlichen parallel zu der Bohrerachse **6.** Während die vorauslaufende Flanke **19** vorzugsweise über ihre Abmessung im Drehsinn **7** einen zu der Bohrerachse **6** gleichbleibenden radialen Abstand zu der Bohrerachse **6** hat, verringert sich der radiale Abstand der nachlaufenden Flanke **20** im Drehsinn **7.**

Der Bohrkopf **2** ist vorzugsweise aus einem gesinterten Werkstoff, insbesondere Wolframkarbid, hergestellt. Die Meißelkanten **10** und die Abbruchkanten **18** sind vorzugsweise monolithisch zusammenhängend, insbesondere ohne Fügezone miteinander verbunden.

Der Förderabschnitt **3** des beispielhaften Bohrers **1** ist durch eine Wendel **8** gebildet. Die Wendel **8** ist rechtsläufig. Die Wendel **8** bewegt somit das Bohrgut entgegen der Schlagrichtung **9,** wenn der Bohrkopf **2** in dem für ihn vorgesehenen Drehsinn **7,** d.h. im Gegenuhrzeigersinn, gedreht wird.

Die Wendel **8** des Bohrers **1** hat beispielsweise vier Wendelstege **21.** Die Anzahl der Wendelstege **21** ist vorzugsweise gleich der Anzahl der Meißelkanten **10.** Die Wendelstege **21** laufen längs der Bohrerachse **6** mehrfach um diese Bohrerachse **6** um. Die Wendelstege **21** beschreiben beim Drehen des Bohrers **1** eine zylindrische Einhüllende, deren Durchmesser einem Wendeldurchmesser entspricht. Jeweils benachbarte Wendelstege **21** schließen zwischen sich eine Wendelnut **22** ein, die in radialer Richtung durch die Einhüllende als geometrisch begrenzt angesehen wird. Das Bohrgut wird in den Wendelnuten **22** durch die Wendelstegen **21** längs der Bohrerachse **6** transportiert. Eine Wendelsteigung **23** liegt vorzugsweise im Bereich zwischen 35 Grad und 60 Grad, z.B. **45** Grad.

Die Wendelstege **21** haben eine von dem Bohrkopf **2** abgewandte Freiflanke **24** und eine dem Bohrkopf **2** zugewandte Förderflanke **25.** Die Freiflanke **24** und die Förderflanke **25** haben vorzugsweise eine zueinander spiegelbildliche Grundform.

Die Freiflanke **24** verläuft helixförmig um die Bohrerachse **6.** Die axiale Abmessung der Freiflanke **24** entspricht der Länge der Wendel **8.** Eine radiale Abmessung der Freiflanke **24** ist durch den Kerndurchmesser **26** der Wendel **8** und den Wendeldurchmesser **27** vorgegeben. Die Freiflanke **24** erstreckt sich von einem Wendelgrund **28** bis zu einem Wendelrücken **29.**

Die Freiflanke **24** ist in radialer Richtung durchgehend konkav ausgebildet. Die Krümmung in radialer Richtung der Freifläche **13** ist moderat. Vorzugsweise liegt ein Krümmungsradius zwischen 50 % und 150 % des Wendeldurchmessers **27.** Die konkave Gestalt bedingt, dass für jedes beliebige Paar zweier Punkte, die nur in radialer Richtung versetzt und in axialer Richtung um weniger als eine Ganghöhe versetzt sind, gilt, dass eine Gerade durch die zwei Punkte zwischen den Punkten außerhalb der Wendel **8** verläuft. Eine Neigung der Freiflanke **24** gegenüber der Bohrerachse **6** erhöht sich kontinuierlich von dem Wendelgrund **28** bis zu dem Wendelrücken **29.** Die Neigung **30** der Freiflanke **24** ist durch die in einer mit der Bohrerachse **6** liegenden und an der Freiflanke **24** in einem Berührpunkt anliegenden Tangente **31** definiert. Die Tangenten haben alle die gleiche Orientierung. Die Tangenten verlaufen in radialer Richtung von der Bohrerachse **6** zu dem Berührpunkt in axialer Richtung zu dem Bohrkopf **2.**

Die Förderflanke **25** verläuft helixförmig um die Bohrerachse **6.** Die axiale Abmessung der Förderflanke **25** entspricht der Länge der Wendel **8.** Eine radiale Abmessung der Förderflanke **25** ist durch den Kerndurchmesser der Wendel **8** und den Wendeldurchmesser vorgegeben. Die Förderflanke **25** erstreckt sich von dem Wendelgrund **28** bis zu dem Wendelrücken **29.**

Die Förderflanke **25** basiert im Wesentlichen auf der spiegelsymmetrischen Gestalt der Freiflanke **24,** ist jedoch im Gegensatz zu der Freiflanke **24** mit einer Vertiefung **32** versehen. Die Vertiefung **32** verläuft mit der Förderflanke **25** helixförmig um die Bohrerachse **6.** Die Vertiefung **32** unterteilt die Förderflanke **25** in drei konzentrische Bereiche: einen inneren Bereich **33,** die Vertiefung **32** und einen äußeren Bereich **34.** Die Vertiefung **32** ist, in radialer Richtung betrachtet, in dem mittleren Drittel der Förderflanke **25** angeordnet. Der innere Radius **35** der Vertiefung **32** ist größer als 60 % des Kerndurchmesser **26** und der äußere Radius **36** ist geringer als 80 % des Wendeldurchmesser **27.** Die Vertiefung **32** bedeckt ein Viertel bis zu der Hälfte der Förderflanke **25.** Eine Länge der Vertiefung **32** entspricht etwa der Länge der Wendel **8.**

Die Vertiefung **32** hat eine innere Kante **37** und eine äußere Kante **38.** Die Neigung **30** der Förderflanke **25** erfährt an den Kanten **37, 38** einen Sprung. Insbesondere erhöht und verringert sich die Neigung **30** vor und nach den Kanten **37, 38.** Beide Kanten weisen eine starke Krümmung in radialer Richtung auf. Der Krümmungsradius ist deutlich geringer als der Krümmungsradius der Freiflanke **24,** beispielsweise geringer als 1/10 des Wendeldurchmessers **27.** Die Förderflanke **25** hat ferner an den Kanten **37, 38** eine konvexe Krümmung. Die Vertiefung **32** bedingt einen Wechsel von der ansonsten konkaven Krümmung der Förderflanke **25** und der konvexen Krümmung an den Kanten **37, 38.** Der Boden **39** der Vertiefung **32,** d.h. die Fläche zwischen den Kanten **37, 38,** kann in radialer Richtung eben oder vorzugsweise konkav gewölbt sein. Eine axiale Abmessung der Kanten **37**, **38** liegt im Bereich zwischen 0,05 mm und 0,5 mm. Die Vertiefung **32** ist für eine bessere Darstellung übertrieben in Fig. 4 dargestellt. Die Vertiefung **32** kann mit dem bloßen Auge sichtbar sein bzw. die Kanten **37, 38** der Vertiefung **32** sind mit dem Finger oder einem Taststift spürbar.

Der innere Bereich **33** und der äußere Bereich **34** sind in radialer Richtung durchgehend konkav gewölbt. Die Neigung des inneren Bereichs **33** nimmt kontinuierlich mit zunehmendem radialen Abstand von der Bohrerachse **6** zu. Die Neigung des äußeren Bereichs **34** nimmt kontinuierlich mit zunehmendem radialen Abstand von der Bohrerachse **6** zu. Die Neigung des inneren Bereichs **33** ist geringer als die Neigung des äußeren Bereichs **34.** Vorzugsweise ist die größte Neigung des inneren Bereichs **33**, z.B. die Neigung an dem Übergang des inneren Bereichs **33** zu der Vertiefung **32,** geringer als die geringste Neigung des äußeren Bereichs **34,** z.B. die Neigung an dem Übergang des äußeren Bereichs **34** zu der Vertiefung **32.** Die Neigung des konkaven Bodens **39** der Vertiefung **32** kann mit zunehmendem radialen Abstand zu der Bohrerachse **6** zunehmen. Die Neigung des Bodens **39** liegt vorzugsweise zwischen der größten Neigung des inneren Bereichs **33** und der geringsten Neigung des äußeren Bereichs **33.**

Die Freiflanke **24** kann entsprechend dem inneren Radius **35** und dem äußeren Radius **36** gleich wie die Förderflanke **25** basierend auf dem inneren Radius **35** und dem äußeren Radius **36** in einen inneren Bereich, einen mittleren Bereich und einen äußeren Bereich unterteilt werden. Der innere Bereich **33** der Förderflanke **25** und der innere Bereich der Freiflanke **24** sind vorzugsweise spiegelsymmetrisch ausgebildet. Der äußere Bereich **34** der Förderflanke **25** und der äußere Bereich der Freiflanke **24** sind vorzugsweise spiegelsymmetrisch ausgebildet. Die Boden **39** der Vertiefung **32** und der mittlere Bereich der Freiflanke 24 können in einer Ausgestaltung spiegelsymmetrisch ausgebildet sein. Der mittlere Bereich der Freiflanke 24 ist jedoch nicht gegenüber dem inneren Bereich und dem äußeren Bereich vertieft. Entsprechend trennen keine sichtbaren oder spürbaren Kanten den mittleren Bereich von den anderen Bereichen. Die Neigung **30** erhöht sich monoton in radialer Richtung.

Bei einer Ausgestaltung ist die Krümmung der Freiflanke **24** geringer als die Krümmung der Förderflanke **25.** Eine Zunahme der Neigung **30** in radialer Richtung ist bei der Freiflanke **24** geringer als Förderflanke **25.**

Die Oberfläche der Förderflanke **25** und der Freiflanke **24** weist eine Rauheit auf. Die Rauheit ist in der Vertiefung **32** geringer als außerhalb der Vertiefung **32**, insbesondere geringer als die Rauheit der an die Vertiefung 32 angrenzenden anderen Bereiche **33, 34** der Förderflanke **25** sein.

Das beispielhafte Einsteckende **4** des Bohrers **1** ist für die Verwendung von drehmeißelnden Handwerkzeugmaschinen ausgelegt. Das Einsteckende **4** hat eine im Wesentlichen zylindrische Form. Das Einsteckende **4** hat zwei geschlossene Nuten **40,** in welchen Verriegelungselemente der Handwerkzeugmaschine radial eingreifen und längs der Bohrerachse **6** gleiten können. Zur Bohrerachse **6** längs ausgerichtete Rillen **41** ermöglichen ein Einleiten eines Drehmoments von der Handwerkzeugmaschine.

## Patentansprüche

1. Bohrer (1) mit
einem Einsteckende (4), einer Wendel (8) und einem Bohrkopf (2),
einer Bohrerachse (6), welche durch das Einsteckende (4), die Wendel (8) und den Bohrkopf (2) verläuft,
die Wendel (8) weist eine Förderflanke (25) auf, welche gegenüber der Bohrerachse (6) geneigt, welche dem Bohrkopf (2) zugewandt ist und welche helixförmig um die Bohrerachse (6) verläuft,
eine helixförmig um die Bohrerachse (6) verlaufende Vertiefung (32) in der Förderflanke (25), **dadurch gekennzeichnet, dass**
eine Rauheit der Oberfläche in der Vertiefung (32) geringer als eine Rauheit der Oberfläche der Förderflanke (25) außerhalb der Vertiefung (32) ist.

2. Bohrer (1) nach Anspruch 1, **dadurch gekennzeichnet, dass** die Förderflanke (25) von einem Wendelgrund (28) bis zu einem Wendelrücken (29) ausgedehnt ist.

3. Bohrer (1) nach Anspruch 1 oder 2 **dadurch gekennzeichnet, dass** die Vertiefung (32) wenigstens ein Viertel der Fläche der Förderflanke (25) ausbildet.

4. Bohrer (1) nach einem der vorhergehenden Ansprüche, **dadurch gekennzeichnet, dass** die Vertiefung (32) von einer inneren Kante (37) und einer äußeren Kante (38) gesäumt ist.

5. Bohrer (1) nach Anspruch 4, wobei die innere Kante (37) in einem Radius (35) um die die Bohrerachse (6) verläuft, welcher größer als 60 % eines Kerndurchmessers (26) der Wendel (8) ist.

6. Bohrer (1) nach einem der vorhergehenden Ansprüche, **dadurch gekennzeichnet, dass** die Wendel (8) eine Freiflanke (24) aufweist, welche gegenüber der Bohrerachse (6) geneigt, welche von dem Bohrkopf (2) abgewandt ist und welche helixförmig um die Bohrerachse (6) verläuft, wobei die Freiflanke (24) in radialer Richtung durchgehend konkav ausgebildet ist.

7. Bohrer (1) nach Anspruch 6, **dadurch gekennzeichnet, dass** die Freiflanke (24) von einem Wendelgrund (28) bis zu einem Wendelrücken (29) ausgedehnt ist.

8. Bohrer (1) nach Anspruch 6 oder 7, **dadurch gekennzeichnet, dass** eine Rauheit der Oberfläche der Freiflanke (24) größer als eine Rauheit der Oberfläche in der Vertiefung (32) ist.

9. Bohrer (3) nach einem der vorhergehenden Ansprüche 1 bis 5, **dadurch gekennzeichnet, dass** die Wendel (8) eine Freiflanke (24) aufweist, welche gegenüber der Bohrerachse (6) geneigt ist und von dem Bohrkopf (2) abgewandt ist, wobei die Freiflanke (24) keine der Förderflanke (25) entsprechende Vertiefung aufweist.

## Claims

1. Drill bit (1) having
a shank (4), a helix (8) and a drill head (2),
a drill-bit axis (6) which extends through the shank (4), the helix (8) and the drill head (2),
the helix (8) has a conveying flank (25) which is inclined with respect to the drill-bit axis (6), which faces the drill head (2) and which extends helically about the drill-bit axis (6),
a recess (32), extending helically about the drill-bit axis (6), in the conveying flank (25), **characterized in that**
a roughness of the surface in the recess (32) is less than a roughness of the surface of the conveying flank (25) outside the recess (32).

2. Drill bit (1) according to Claim 1, **characterized in that** the conveying flank (25) extends from a helix bottom (28) to a helix ridge (29).

3. Drill bit (1) according to Claim 1 or 2, **characterized in that** the recess (32) forms at least a quarter of the area of the conveying flank (25).

4. Drill bit (1) according to one of the preceding claims, **characterized in that** the recess (32) is bordered by an inner edge (37) and an outer edge (38).

5. Drill bit (1) according to Claim 4, wherein the inner edge (37) extends about the drill-bit axis (6) at a radius (35) which is greater than 60% of a core diameter (26) of the helix (8).

6. Drill bit (1) according to one of the preceding claims, **characterized in that** the helix (8) has a free flank (24) which is inclined with respect to the drill-bit axis (6), which faces away from the drill head (2) and which extends helically about the drill-bit axis (6), wherein the free flank (24) is formed so as to be continuously concave in a radial direction.

7. Drill bit (1) according to Claim 6, **characterized in that** the free flank (24) extends from a helix bottom (28) to a helix ridge (29).

8. Drill bit (1) according to Claim 6 or 7, **characterized in that** a roughness of the surface of the free flank (24) is greater than a roughness of the surface in the recess (32).

9. Drill bit (3) according to one of the preceding Claims 1 to 5, **characterized in that** the helix (8) has a free flank (24) which is inclined with respect to the drill-bit axis (6) and faces away from the drill head (2), wherein the free flank (24) does not have a recess corresponding to the conveying flank (25).

## Revendications

1. Foret (1) comprenant
une extrémité d'insertion (4), une hélice (8) et une tête de forage (2),
un axe de foret (6), qui s'étend à travers l'extrémité d'insertion (4), l'hélice (8) et la tête de forage (2),
l'hélice (8) présentant un flanc de transport (25), qui est incliné par rapport à l'axe de foret (6), qui est tourné vers la tête de forage (2) et qui s'étend sous forme hélicoïdale autour de l'axe de foret (6),
un creux (32) s'étendant sous forme hélicoïdale autour de l'axe de foret (6) dans le flanc de transport (25), **caractérisé en ce que**
une rugosité de la surface dans le creux (32) est inférieure à une rugosité de la surface du flanc de transport (25) à l'extérieur du creux (32).

2. Foret (1) selon la revendication 1, **caractérisé en ce que** le flanc de transport (25) s'élargit à partir d'un fond d'hélice (28) jusqu'à un dos d'hélice (29).

3. Foret (1) selon la revendication 1 ou 2, **caractérisé en ce que** le creux (32) forme au moins un quart de la surface du flanc de transport (25).

4. Foret (1) selon l'une quelconque des revendications précédentes, **caractérisé en ce que** le creux (32) est bordé par un bord intérieur (37) et un bord extérieur (38).

5. Foret (1) selon la revendication 4, le bord intérieur (37) s'étendant selon un rayon (35) autour de l'axe de foret (6) qui est supérieur à 60 % du diamètre de noyau (26) de l'hélice (8).

6. Foret (1) selon l'une quelconque des revendications précédentes, **caractérisé en ce que** l'hélice (8) présente un flanc libre (24), qui est incliné par rapport à l'axe de foret (6), qui est détourné de la tête de forage (2) et qui s'étend sous forme hélicoïdale autour de l'axe de foret (6), le flanc libre (24) étant réalisé de manière concave en continu dans la direction radiale.

7. Foret (1) selon la revendication 6, **caractérisé en ce que** le flanc libre (24) s'élargit à partir d'un fond d'hélice (28) jusqu'à un dos d'hélice (29).

8. Foret (1) selon la revendication 6 ou 7, **caractérisé en ce qu'**une rugosité de la surface du flanc libre (24) est supérieure à une rugosité de la surface dans le creux (32).

9. Foret (3) selon l'une quelconque des revendications 1 à 5 précédentes, **caractérisé en ce que** l'hélice (8) présente un flanc libre (24), qui est incliné par rapport à l'axe de foret (6) et qui est détourné de la tête de forage (2), le flanc libre (24) ne présentant pas de creux correspondant au flanc de transport (25).
